# EUROPEAN PATENT SPECIFICATION

(11) **EP 4 289 869 B1**
(45) Date of publication and mention of the grant of the patent: **04.09.2024**
(21) Application number: 22709375.4
(22) Date of filing: 07.02.2022
(51) Int. Cl.: C08B 31/04, C08L 3/06, B65D 65/46, C08B 30/12

(54) **PROCESS FOR THE PRODUCTION OF STARCH BETAINATE**
VERFAHREN ZUR HERSTELLUNG VON STÄRKE-BETAINAT
PROCÉDÉ D'OBTENTION DE BÉTAÏNATE D'AMIDON

(30) Priority: 08.02.2021 PT 2021117053
(43) Date of publication of application: 13.12.2023
(73) Proprietor: RAIZ - Instituto De Investigação Da Floresta E Papel, 3800-783 Eixo (PT); Universidade De Coimbra, 3004-504 Coimbra (PT)
(72) Inventor: MONTEIRO VALENTE, Artur José, 3004-535 Coimbra (PT); TAVARES FERREIRA, Paulo Jorge, 3004-535 Coimbra (PT); BAIRRADA MURTINHO, Dina Maria, 3004-535 Coimbra (PT); AGUADO GARCIA, Roberto Juan, 3004-535 Coimbra (PT); SHARMA, Mohit, 3004-535 Coimbra (PT); MARTINS LOURENÇO, Ana Filipa, 3800-783 Eixo (PT)
(86) International application number: PCT/IB2022/051030
(87) International publication number: WO 2022/168011

(56) References cited:
- WO-A1-00/15669
- GRANO H ET AL: "Preparation of starch betainate: a novel cationic starch derivative", CARBOHYDRATE POLYMERS, APPLIED SCIENCE PUBLISHERS , LTD BARKING, GB, vol. 41, no. 3, 1 March 2000 (2000-03-01), pages 277 - 283, XP004244360, ISSN: 0144-8617, DOI: 10.1016/S0144-8617(99)00146-0

## Description

### FIELD OF THE INVENTION

The present invention relates to a process for producing starch betainate, in particular to a process for producing starch betainate in solution with an aprotic solvent or in a dry medium with a ball mill.

### BACKGROUND OF THE INVENTION

Conventional commercially available cationic starches are produced by etherification of starch with (3-chloro-2-hydroxypropyl)trimethylammonium chloride (CHPTAC) or 2,3-epoxypropyltrimethylammonium chloride (EPTAC) [1]. These cationic starches are extensively used in papermaking, both as wet end additive and as sizing agents [2-4]. Additionally, they have been shown to be effective flocculants in wastewater treatment [5]. Due to their alleged biodegradability, along with the high availability of starch, CSs are frequently advocated as environmentally-friendly alternatives to synthetic polyelectrolytes [2,6]. However, some issues have put the greenness of cationic polysaccharide ethers under question [7]. EPTAC (or CHPTAC) ultimately comes from propylene, the reaction produces undesirable by-products, and highly substituted CS ethers actually show poor biodegradability [8].

Alternative synthetic routes leading to cationic starch esters, containing more labile cationic groups, were first proposed in 2000 [9]. Betaine, a naturally found amino acid, was converted into its acyl chloride and subsequently reacted with starch, in the presence of pyridine [9]. Nonetheless, the chlorination step is not mandatory, as some researchers have reported the production of starch betainate (SB) by Steglich esterification, using N,N'-diisopropylcarbodiimide and 4-dimethylaminopyridine [10]. In these cases, the medium was 1,4-dioxane, in which neither native or cationic starch is soluble, and degrees of substitution (DS) below 0.3 were obtained.

The works cited above state that the replacement of etherifying cationizing reagents by betaine hydrochloride leads to more biodegradable cationic starches [9, 10]. As a rule, esters are not only more prone to biodegradation than their ether counterparts, but also less chemically stable in general [11].

From what is known, transesterification of starch has been carried out with a small number of esters, including vinyl laureate [12] and vinyl acetate [13], and using K2CO3 as base catalyst. The reaction of polysaccharides with fatty acid methyl esters was also studied using organic catalysts such as triazabicyclodecene, or alternative reaction media like ionic liquids [14, 15]. The patent EP2079762B1 [16], from Chemigate Oy, a manufacturer of modified starches, described for the first time the transesterification of hydroxy polymers with amino acid esters. Their method implied a two-phase (solid/liquid) synthesis at 80-160 °C, with less than 25% of water. However, the approach described in this patent application is different since the transesterification takes place either in anhydrous solution or in solid state.

While the modification of starch in water or organic solvents is prevalent in the literature, commercial cationic starch ethers are frequently obtained by semi-dry or dry methods [2]. Ball milling (BM) is a dry state, cost effective and eco-friendly approach, which uses mechanical actions such as friction, collision, impingement and shear between grinding balls and container walls [17,18]. Some key physicochemical properties of starch get clearly affected by BM. Its crystallinity decreases, becoming more reactive [19, 20]. Its porosity increases by developing cavities in the granules [21] and so does the pasting stability, resulting in lower viscosity when dispersed in water [22]. Starch nanoparticles in the range of 9-12 nm can be obtained from 1-100 µm granules [23]. However, none of those contributions implied a chemical reaction concurrently with ball milling. In this regard, Li et al.'s [24] dry synthesis of octenyl succinate starch should be mentioned. The authors highlighted that the structural disruption of starch granules by ball milling increased the reactivity.

EP1312616B1 describes the production of compounds of the betaine-polysaccharide family by reacting a polysaccharide with an N,N-dialkylaminocarboxylic acid in the presence of a polar aprotic solvent such as dimethylsulfoxide (DMSO) and/or dimethylformamide, and a quaternary agent that consists of a halide, such as a chloride, an iodide or a bromide. WO00/15669 describes the preparation of cationic starch by covalently bonding betaine via an ester bond to a part of the hydroxyl groups of the starch.

Taking into account the published knowledge, there is a need for a process for the production of starch betainate that does not generate unwanted by-products, that does not involve the use of water, that can be carried out through what can be considered a true transesterification in solid state and at room temperature, or in an anhydrous solution, which makes it possible to obtain water-soluble starch betainate, even in cold water, and with a degree of substitution that falls within the high range of values for cationic starches commercially available. Additionally, it is relevant the existence of a process for the production of starch betainate that, when in alkaline conditions, avoids the addition of a third reagent such as potassium carbonate (K2CO3), commonly used in previous art. The possibility of the process taking place through economically and ecologically favorable means, such as ball milling, will also be relevant.

The process described in this invention intends to eliminate these deficiencies of the state of the art, still allowing obtaining a product with a high degree of purity and whiteness, without any decrease in the whiteness level of the product obtained by the process described in this document in relation to the initial product.

Starch betainate has interesting antimicrobial properties and its use in the production of food packaging is of special relevance. For this, its film-forming properties are also important, namely for the creation of barriers on the surface of the paper for allowing safety and maintenance of the different packaged foods in a good state of conservation.

It also provides improvements to the properties of the paper which contains it, such as retention capacity, water permeability and strength characteristics.

It is also expected the use of the starch obtained by the process described in this invention in the production of uncoated fine printing and writing paper, since its cationicity allows binding with the negative components, conferring mechanical strength properties and aiding in the retention of fines and mineral fillers. In this way, paper machine drainability and operability are also improved. Likewise, starch can also be added to the surface of the paper, in surface sizing formulations, promoting improved optical properties and printability. Due to the aforementioned improvement in mechanical strength, when applied to the surface, the starch can also promote the reduction of vessel picking and the releasing of dust.

### References

[1] V. Haack, T. Heinze, G. Oelmeyer, W.M. Kulicke, Starch derivatives of high degree of functionalization, 8 synthesis and flocculation behavior of cationic starch polyelectrolytes, Macromol. Mater. Eng. 287 (2002) 495-502.
[2] M. Sharma, R. Aguado, D. Murtinho, A.J.M. Valente, A.P. Mendes De Sousa, P.J.T. Ferreira, A review on cationic starch and nanocellulose as paper coating components, Int. J. Biol. Macromol. 162 (2020) 578-598. https://doi.org/10.1016/j.ijbiomac.2020.06.131.
[3] J. Liu, R. Yang, F. Yang, Effect of the starch source on the performance of cationic starches having similar degree of substitution for papermaking using deinked pulp, BioResources. 10 (2015) 922-931.
[4] H. Li, Y. Qi, Y. Zhao, J. Chi, S. Cheng, Starch and its derivatives for paper coatings: A review, Prog. Org. Coatings. 135 (2019) 213-227.
[5] S. Pal, D. Mal, R.P. Singh, Cationic starch: An effective flocculating agent, Carbohydr. Polym. 59 (2005) 417-423.
[6] H. Zhou, L. Zhou, X. Yang, Optimization of preparing a high yield and high cationic degree starch graft copolymer as environmentally friendly flocculant: Through response surface methodology, Int. J. Biol. Macromol. 118 (2018) 1431-1437.
[7] M.J. Farrell, P.J. Hauser, Cationic cotton, reservations to reality, AATCC Rev. (2013).
[8] J. Bendoraitiene, E. Lekniute-Kyzike, R. Rutkaite, Biodegradation of cross-linked and cationic starches, Int. J. Biol. Macromol. 119 (2018) 345-351.
[9] H. Granö, J. Yli-Kauhaluoma, T. Suortti, J. Käki, K. Nurmi, Preparation of starch betainate: a novel cationic starch derivative, Carbohydr. Polym. 41 (2000) 277-283.
[10] R. Auzély-Velty, M. Rinaudo, Synthesis of starch derivatives with labile cationic groups, Int. J. Biol. Macromol. 31 (2003) 123-129.
[11] I. Palej Jakopović, S. Kapić, S. Alihodžić, V. Šunjić, Ethers from esters; From exceptional transformation to synthetic method, Arkivoc. (2015). https://doi.org/10.3998/ark.5550190.p008.960.
[12] H. Winkler, W. Vorwerg, H. Wetzel, Synthesis and properties of fatty acid starch esters, Carbohydr. Polym. 98 (2013) 208-216. https://doi.org/10.1016/j.carbpo1.2013.05.086.
[13] R. Dicke, D.O. Klemm, Synthesis of regioselectively functionalized polysaccharide esters avoiding protecting groups, in: Am. Chem. Soc. Polym. Prepr. Div. Polym. Chem., 2000.
[14] A. Schenzel, A. Hufendiek, C. Barner-Kowollik, M.A.R. Meier, Catalytic transesterification of cellulose in ionic liquids: Sustainable access to cellulose esters, Green Chem. 16 (2014) 3266-3271. https://doi.org/10.1039/c4gc00312h.
[15] Z. Söyler, M.A.R. Meier, Catalytic Transesterification of Starch with Plant Oils: A Sustainable and Efficient Route to Fatty Acid Starch Esters, ChemSusChem. 10 (2017) 182-188. https://doi.org/10.1002/cssc.201601215.
[16] A. Laine, H. Luttikhedde, A process for the preparation of hydroxy polymer esters and their use, EP2079762, 2012.
[17] T.A. Wani, F.A. Masoodi, R. Akhter, F.A. Sofi, Techno-functional characterization of chitosan nanoparticles prepared through planetary ball milling, Int. J. Biol. Macromol. 154 (2020) 166-172. https://doi.org/10.1016/J.IJBIOMAC.2020.03.034.
[18] L. Dai, C. Li, J. Zhang, F. Cheng, Preparation and characterization of starch nanocrystals combining ball milling with acid hydrolysis, Carbohydr. Polym. 180 (2018) 122-127. https://doi.org/10.1016/J.CARBPOL.2017.10.015.
[19] Z.-Q. Huang, X. Xie, Y. Chen, J. Lu, Z.-F. Tong, Ball-milling treatment effect on physicochemical properties and features for cassava and maize starches, Comptes Rendus Chim. 11 (2008) 73-79. https://doi.org/10.1016/J.CRCI.2007.04.008.
[20] Y.J. Kim, T. Suzuki, T. Hagiwara, I. Yamaji, R. Takai, Enthalpy relaxation and glass to rubber transition of amorphous potato starch formed by ball-milling, Carbohydr. Polym. 46 (2001) 1-6. https://doi.org/10.1016/S0144-8617(00)00274-5.
[21] T.Y. Liu, Y. Ma, S.F. Yu, J. Shi, S. Xue, The effect of ball milling treatment on structure and porosity of maize starch granule, Innov. Food Sci. Emerg. Technol. 12 (2011) 586-593. https://doi.org/10.1016/J.IFSET.2011.06.009.
[22] X. Tan, B. Zhang, L. Chen, X. Li, L. Li, F. Xie, Effect of planetary ball-milling on multi-scale structures and pasting properties of waxy and high-amylose cornstarches, Innov. Food Sci. Emerg. Technol. 30 (2015) 198-207. https://doi.org/10.1016/J.IFSET.2015.03.013.
[23] M. Ahmad, A. Gani, F.A. Masoodi, S.H. Rizvi, Influence of ball milling on the production of starch nanoparticles and its effect on structural, thermal and functional properties, Int. J. Biol. Macromol. 151 (2020) 85-91. https://doi.org/10.1016/J.IJBIOMAC.2020.02.139.
[24] N. Li, M. Niu, B. Zhang, S. Zhao, S. Xiong, F. Xie, Effects of concurrent ball milling and octenyl succinylation on structure and physicochemical properties of starch, Carbohydr. Polym. 155 (2017) 109-116. https://doi.org/10.1016/J.CARBPOL.2016.08.063.
[25] A. Pfeifer, R. Hampe, T. Heinze. Synthesis and characterization of novel water-soluble and bactericidic cationic starch esters, Starch 69 (2017) ID 1700029.
[26] R. Owusu-Apenten, Introduction to food chemistry, 2004. https://doi.org/10.5860/choice.43-2809.
[27] R.G. Webb, M.W. Haskell, C.H. Stammer, A Nuclear Magnetic Resonance Method for Distinguishing a-Amino Acids from B and y isomers, J. Org. Chem. 34 (1969) 576-580.
[28] C.L. Opstad, T.B. Melo, H.R. Sliwka, V. Partali, Formation of DMSO and DMF radicals with minute amounts of base, Tetrahedron. (2009). https://doi.org/10.1016/j.tet.2009.06.109.
[29] X.F. Wu, K. Natte, The Applications of Dimethyl Sulfoxide as Reagent in Organic Synthesis, Adv. Synth. Catal. (2016). https://doi.org/10.1002/adsc.201501007.
[30] H. Tang, B.P. Hills, Use of 13C MAS NMR to study domain structure and dynamics of polysaccharides in the native starch granules, Biomacromolecules. (2003). https://doi.org/10.1021/bm0340772.
[31] J.J. Cael, J.L. Koenig, J. Blackwell, Infrared and raman spectroscopy of carbohydrates, Carbohydr. Res. (1974). https://doi.org/10.1016/s0008-6215(00)82465-9.
[32] T. Yue, X. Wu, Depressing iron mineral by metallic-starch complex (MSC) in reverse flotation and its mechanism, Minerals. (2018). https://doi.org/10.3390/min8030085.
[33] A. Hebeish, A. Higazy, A. El-Shafei, S. Sharaf, Synthesis of carboxymethyl cellulose (CMC) and starch-based hybrids and their applications in flocculation and sizing, Carbohydr. Polym. 79 (2010) 60-69.
[34] P. Wang, X. Wu, X. Dong-hua, X. Kun, T. Ying, D. Xi-bing, L. Wen-bo, Preparation and characterization of cationic corn starch with a high degree of substitution in dioxane - THF - water media, Carbohydr. Res. 344 (2009) 851-855.
[35] M.M. Millard, F.R. Dintzis, J.L. Willett, J.A. Klavons, Light-scattering molecular weights and intrinsic viscosities of processed waxy maize starches in 90% dimethyl sulfoxide and H2O, Cereal Chem. (1997). https://doi.org/10.1094/CCHEM.1997.74.5.687.
[36] R. Aguado, A.F. Lourenço, P.J.T. Ferreira, A. Moral, A. Tijero, The relevance of the pretreatment on the chemical modification of cellulosic fibers, Cellulose. (2019). https://doi.org/10.1007/s10570-019-02517-7.
[37] R. Aguado, A.F. Lourenco, P.J. Ferreira, A. Moral, A. Tijero, Cationic cellulosic derivatives as flocculants in papermaking, Cellulose. 24 (2017). https://doi.org/10.1007/s10570-017-1313-y.

### SUMMARY OF THE INVENTION

In the invention described in this document, for the first time, starch betainate is obtained by transesterification in polar aprotic solvents and, also for the first time, this reaction is carried out using a ball mill. Thus the methyl betainate was synthesized and transesterified with starch, both under homogeneous conditions (wet method) and by ball milling.

By the method of obtaining starch betainate chloride described herein, betaine hydrochloride is esterified by adding an equimolar amount of thionyl chloride to methanol followed by the addition of betaine hydrochloride until a solution of methyl betainate chloride is produced. After refluxing this solution, the methanol is evaporated, a trituration with ethyl ether occurs, and then it is dried in vacuum, washed with ethyl ether until the yellow color disappears and the solid methyl betainate chloride obtained is stored under vacuum. These procedures are followed by the transesterification of starch with betainate chloride obtained in solution with an aprotic solvent or in a dry medium. Finally, the unreacted methyl betainate is removed by dissolving the resulting product in distilled water, with stirring and heating, and reprecipitation in ethanol.

Native and cooked starches are used in the process described. In the case of using cooked starches, there is a previous step that involves cooking them in distilled water and using a buffer solution of α-amylase subsequently denatured.

In one preferred embodiment of the invention, the transesterification takes place in solution and in an alkaline medium, with the pre-activation of the starch taking place with a solution of sodium hydroxide in ethanol, at reflux, and obtaining an alkalized starch suspension. This step is followed by vacuum filtration of the obtained alkalized starch suspension and washing with ethanol followed by washing with ethyl ether until excess sodium hydroxide and ethanol are removed from the solid alkalized starch obtained. This product is then transesterified with methyl betainate chloride in solution with an aprotic solvent and at temperatures between 50 and 90°C, with subsequent reflux of the resulting solution also taking place. Finally, the resulting solution is precipitated in absolute ethanol, followed by washing with ethanol, vacuum filtration and drying in an oven.

In one preferred embodiment of the invention, the transesterification takes place in solution and in an acidic medium, being transesterified with methyl betainate chloride in solution with an aprotic solvent previously acidified with a strong acid, and at temperatures between 50 and 90 °C and subsequent reflux of the resulting solution. The resulting solution is precipitated in absolute ethanol, followed by an ethanol wash, vacuum filtration and oven drying. In a preferred form of the invention the strong acid is sulfuric acid.

In one preferred embodiment of the invention the aprotic solvent is dimethylformamide or dimethylsulfoxide.

In one preferred embodiment of the invention, the transesterification takes place in a dry and basic medium, through the pre-activation of the starch, as already described above, to obtain solid alkalized starch, followed by the transesterification of the alkalized starch obtained with methyl betainate chloride in a ball mill at room temperature.

In one preferred embodiment of the invention, the transesterification takes place in a dry and acidic medium, with the transesterification of the starch taking place with methyl betainate chloride after mixing with an acid in solid state and with a pKa equal to or less than 1, in a ball mill at room temperature.

In one preferred embodiment of the invention the solid acid is sulfamic acid.

### BRIEF DESCRIPTION OF THE DRAWINGS

Figure 1. Esterification (reaction A) of betaine hydrochloride
Figure 2. Transesterification reactions of methyl betainate chloride and starch for the production of starch betainate. It should be noted that substitution on carbons 2 and 3 of AGU is also possible.
Figura3. ¹H-NMR (a) and ¹³C-NMR (b) spectra of betaine hydrochloride (MeBetCl) (DMSO-d6).
Figure 4. ATR-FTIR spectra of betaine hydrochloride (BetHCl) (bottom) and of MeBetCl (top).
Figure 5. 1H NMR spectrum for starch betainate obtained in alkaline medium (experiment 2 in Table 1) compared to that of starch (D2O). HDO signal (4.8 ppm) has been cut.
Figure 6. ATR-FTIR spectrum of starch betainate obtained in alkaline medium (MeBetCl/AGU = 2, DMF) compared to those of cooked and alkali-activated starches.
Figure 7. TGA (a) and DTG (b) curves for highly substituted starch betainates, obtained in either alkaline (MeBetCl) or acidic (3 eq. of MeBetCl) media, compared to those curves for native starch, cooked starch, and a conventional cationic starch ether.
Figure 8. Inherent viscosity (vᵢₙₕ) of starch derivatives. For all starch betainate samples, the MeBetCl/AGU ratio was 2.
Figure 9. Optical micrographs of native corn starch (a), cooked starch (b), starch betainate produced in basic DMF (c), and starch be obtained by solid-state transesterification (d).
Figure 10. Scanning electron micrographs of dry native starch (a); cooked starch (b); betainates thereof that were synthesized in basic DMF (c), acidic DMF (d), acidic DMSO (e) and ball milling after alkaline activation (f); CS ether (g) . The micrographs were obtained at different magnifications to allow a better detailed comparison.
Figure 11. 1H NMR spectrum for starch betainate obtained in acid medium, experiment 6 in Table 1 (D2O). The HDO signal (4.8 ppm) was clipped.
Figure 12. ATR-FTIR spectra of starch betainate obtained with ball milling (MeBetCl / AGU = 2).

### DETAILED DESCRIPTION OF THE INVENTION

Betaine hydrochloride is first esterified with thionyl chloride and methanol. The starch is then efficiently converted to starch betainate in aprotic solvents such as dimethylformamide (DMF)/dimethylsulfoxide (DMSO), and using a strong acid as a catalyst or a preactivation of the polymer in sodium hydroxide (NaOH)/ethanol. In addition, solid state transesterification is carried out by means of a ball mill, for which a solid and less corrosive acid is used. Degrees of substitution of up to 0.4 are obtained using, for example, alkaline activation and DMF as a medium. No by-products are detected, but the starch undergoes severe depolymerization in a wet media, especially in DMSO. The transesterification described, with its variety of possibilities, produces cationic starches that are more biodegradable than conventional trimethylammonium ethers (2-hydroxyalkyl) and whose properties, such as rheology, thermal stability and morphology, are strongly dependent on the choice of reaction conditions.

The dry medium process described in this patent application is considered a true solid-state transesterification at room temperature, without any melting of the process constituents.

On the other hand, starch betainate produced in polar aprotic solvents, according to the process described in this document, especially when the degree of substitution (DS) is high, can be dissolved in water, even in cold water, with strong decrystallization taking place, since the granular structure is completely broken, no retrogradation is observed.

The starch betainate produced by the processes described in this patent application, unlike conventional cationic starches, i.e. etherified with (2-hydroxypropyl)-3-trimethylammonium groups), is biologically based and biocompatible. The described process also does not generate unwanted by-products.

In terms of properties of starch betainate Pfeifer et al., 2017 [25] exemplifies its antimicrobial properties and its use in paper production: the presence of starch betainate reduces the growth of bacteria on the paper substrate, being clearly an advantage for packaging with food application. As with other starches, the application of starch betainate to paper results in the improvement of different paper properties such as retention, water permeability, and strength of the paper produced.

However, contrary to what was observed with conventional cationic starches, the whiteness values remained unchanged in the addition of the starch betainate, produced with the process described herein, with OBAs compounds (Optical Brightening Agents, optical brighteners). It is found that cationic starches with a high degree of substitution reduce the effect of OBAs, i.e., reduce the whiteness values of the paper produced.

The highest degree of substitution, 0.4, was obtained by depolymerizing the starch with amylase, pre-activating it in NaOH/ethanol, and reacting it in DMF with three mol of methyl betainate chloride per mol of anhydroglucose unit (AGU). The simple transesterification process in DMF results in an effective dissociation of alkaline starch, although it does not undergo extensive solvolysis.

The ball milling process allowed the starch betainate to retain a similar molecular weight and did not cause appreciable degradation, particularly when alkaline activation was selected. Although the degrees of substitution achieved (0.04) were lower than those achieved in DMF, these are still within the range of values considered high for cationic starches with application in paper production.

### Examples

### 1. Materials

Corn starch was dried at 100 °C for 2 h before use. Its average molecular weight, as estimated by viscometry (ISO 3105) and using Mark-Houwink parameters for amylose [26], was at least 3.2 × 105 g mol⁻¹, corresponding to an approximately degree of polymerization (DP) of 2.0 × 10³.

Betaine hydrochloride (BetHCl, 99%) was used as-is for esterification. Thionyl chloride (97%) and sulfamic acid (99.3%) were used. The used solvents were purified or dried prior to use following standard procedures. Other commercially available compounds were used without further purification.

The cationic starch ester was characterized by ¹H and ¹³C NMR spectroscopy, infrared spectroscopy, thermogravimetric analysis, viscosity measurements, optical microscopy (in water) and scanning electron microscopy (dry).

### 2. Synthesis of starch betainate (SB)

Corn starch was cooked in distilled water using α-amylase in a buffer solution (0.45µLg⁻¹ of starch) under continuous stirring and heating for 5 min at 80 °C. The enzyme was deactivated by adding 1M ZnSO₄ (170 µLg⁻¹ of starch) and temperature was then raised up to 95 °C for 15 min. After cooking, the carbohydrate solution was cooled down up to environmental temperature and absolute ethanol was added to precipitate the cooked starch, which was then vacuum filtered and stored in an oven at 50 °C.

### Esterification of betaine hydrochloride

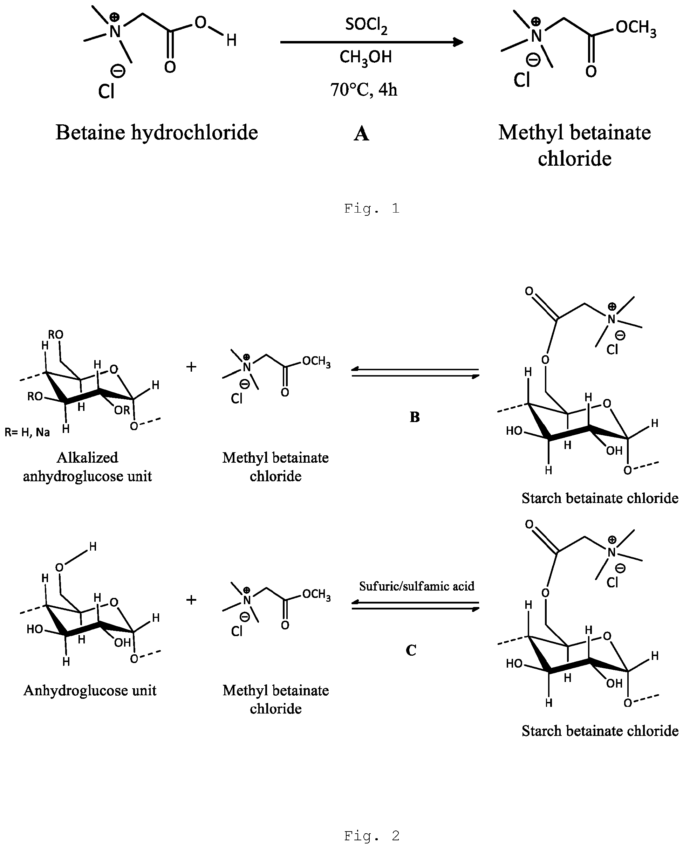

The synthesis of betaine methyl ester was carried out using SOCl₂/methanol [27]. In order to maximize the efficiency of the reaction, an equimolar ratio of SOCl₂: (betaine hydrochloride) was used. Briefly, 4.72 mL SOCl₂ (65.1 mmol) is added dropwise to methanol (50 mL) in an ice bath. Then, 10.0 g (65.1 mmol) of betaine hydrochloride are added and the reaction mixture is refluxed for 4 h at 70 °C (Figure 1). The solvent is removed by evaporation on a rotary evaporator and the product is triturated twice with ethyl ether to remove the dimethyl sulfite formed. The product is vacuum dried and washed several times with ethyl ether until the yellow color disappears. The product is stored under vacuum.

### Transesterification in solution

Transesterification was carried out using native and cooked starch (0.5g) and methyl betainate chloride in an acidic and alkaline medium.

The alkaline medium was obtained by pre-activating the starch with a solution of NaOH in ethanol (8 w/w %), at reflux for 60 min. The alkalized starch suspension is vacuum filtered, washed with ethanol to remove excess NaOH, and then with ethyl ether to remove ethanol. The product is stored under vacuum for a maximum of one day or used immediately in transesterification reactions.

In transesterification in basic medium, methyl betainate chloride and alkalized starch are dissolved in 10 ml of dimethylformamide (DMF)/dimethylsulfoxide (DMSO) and refluxed for 24h at 70°C (Figure 2, reaction B). The product obtained is precipitated in absolute ethanol (100-150 ml), washed 2-3 times with ethanol, filtered in vacuum and stored in an oven at 50°C. The effect of different molar ratios of methyl betainate:starch (from 1 to 3) on the degree of substitution was evaluated in both media.

In the transesterification reaction in acidic medium, a solution of H₂SO₄ 0.04 M in DMF/DMSO (10 ml) was used and the mixture was refluxed for 24 h at 70 °C (Figure 2, Reaction C).

### Solvent-free transesterification

The transesterification reaction was also carried out using a ball mill (Retsch brand, model MM200), using 0.5 g of native/cooked corn starch and methyl betainate chloride under alkaline and acidic conditions (two balls, 25 sec⁻¹, 2 h). For the alkaline medium, the previous activation of the cooked starch was carried out. As acid catalyst, sulfamic acid (0.01 g) was used. The solid product is, in this case, obtained directly.

The products obtained from the transesterifications in solution and without solvent were dissolved in distilled water, with stirring and heating, and reprecipitated in ethanol to remove unreacted methyl betainate and, where applicable, sulfamic acid. In the case of transesterification in a basic medium, dissolution in water also guarantees the transformation of unreacted alkoxide groups into hydroxyl.

### Betaine hydrochloride esterification analysis (BetHCl)

After the complete removal of dimethylsulfite and any other by-product formed by the reaction of methanol with thionyl chloride, 1.054 g of dry impure crystals per gram of BetHCl were obtained. The crystals consisted of methyl betainate chloride ester (MeBetCl) and a small fraction of unconverted BetHCl. Unlike Webb, Haskell, and Stammer (1969), the unreacted amino acid was not completely removed by recrystallization. Recrystallization attempts were unsuccessful, as BetHCl and MeBetCl precipitated together upon addition of diethyl ether.

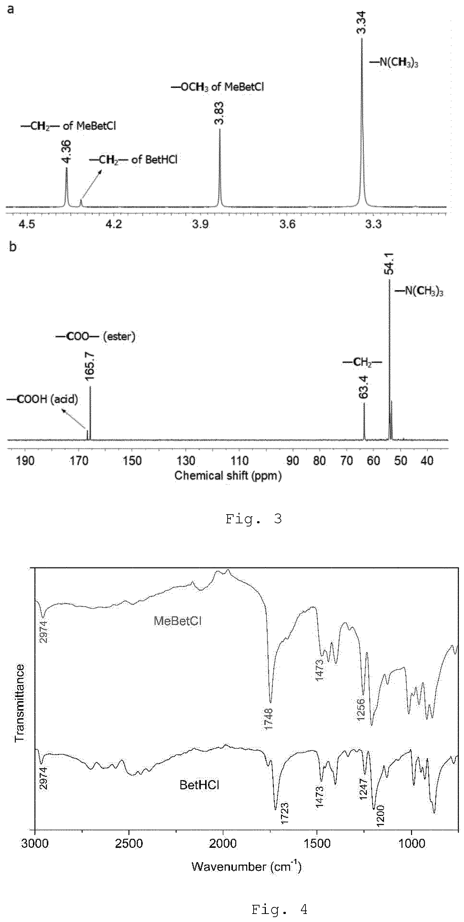

Conversion to MeBetCl was as high as 86%, as calculated from the ¹H NMR spectrum shown in Figure 3, a) .

The singlets at 3.34, 3.83 and 4.36 ppm correspond to the nine hydrogens of the quaternary ammonium methyl groups of MeBetCl and BetHCl, the three methoxyl hydrogens and the two methylene hydrogens of MeBetCl, respectively (Figure 3, a). The singlet at 4.31 ppm is due to unconverted BetHCl.

Ester bond formation is also evidenced in the ¹³C NMR spectrum (Figure 3, b). The signal in the lower field (166.7 ppm) is due to carboxyl groups. Esterification leads to a shift of this carbon slightly to high fields (165.7 ppm).

In Figure 4, the infrared spectra of BetHCl and MeBetCl are compared. The characteristic peaks at 1723 cm⁻¹, 2974 cm⁻¹, 1200 cm⁻¹, 1247 cm⁻¹, 1473 cm⁻¹ and 3400 - 2400 cm⁻¹ can be attributed to C=O, CH, CC, CO, - Stretching N(CH₃)₃ and OH, respectively. Compared to BetHCl, the two most characteristic bands in the MeBetCl spectrum are the strong C=O bond (ester bond), which appears at 1748 cm⁻¹ and is clearly different from that associated with the carboxylic group, and the CO elongation, which appears at 1256 cm⁻¹.

### Analysis of transesterification in solution (wet method)

The degree of substitution for the transesterification reactions carried out in polar aprotic solvents, together with the reaction conditions, are shown in Table 1. A maximum degree of substitution (DS) of 0.4 was obtained for a molar ratio MeBetCl / AGU of 3, after alkaline activation of starch and using DMF as solvent (experiment 3). This is in the high range of cationic starches [2].

As characteristic of an equilibrium reaction (Figure 2), the greater the excess in MeBetCl, the greater the conversion. Alkaline activation seems to favor the reaction, as it resulted in a higher DS than the acid-catalyzed process. In addition, the use of starch in the cooked form increased the DS obtained, which can be explained by its lower degree of molecular order (lower crystallinity) and its higher solubility.

The reaction efficiency was not as high in DMSO, especially with alkaline starch, although this solvent allowed good results in starch esterification [12,13]. The lower DS values are probably due to degradation in that specific medium [28,29] . Thus, a large part of the product was lost, such as cationic maltodextrins or other oligosaccharides that could not be recovered by precipitation, while only the least soluble and least substituted fraction could be analyzed. As native starch was more resistant to this degradation, experiment number 12 (Table 1) was the only case in which the DS reached exceeded that of cooked starch.

**Table 1. Reaction conditions and degree of substitution for the transesterification of starch in solution.**

| Exp. | Type of starch | Medium | MeBe tCl/ AGU | Solvent | DS | Exp. | Type of starch | Medium | MeBetCl /AGU | Solvent | DS |
|---|---|---|---|---|---|---|---|---|---|---|---|
| 1 | Cooked | Alkali ne | 1 | DMF | 0.16 | 9 | Cooked | Alkalin e | 1 | DMSO | 0.01 |
| 2 | Cooked | | 2 | DMF | 0.33 | 10 | Cooked | | 2 | DMSO | 0.05 |
| 3 | Cooked | | 3 | DMF | 0.40 | 11 | Cooked | | 3 | DMSO | 0.02 |
| 4 | Native | | 2 | DMF | 0.01 | 12 | Native | | 2 | DMSO | 0.07 |
| 5 | Cooked | Acidic | 1 | DMF | 0.08 | 13 | Cooked | Acidic | 1 | DMSO | 0.01 |
| 6 | Cooked | | 2 | DMF | 0.14 | 14 | Cooked | | 2 | DMSO | 0.10 |
| 7 | Cooked | | 3 | DMF | 0.18 | 15 | Cooked | | 3 | DMSO | 0.11 |
| 8 | Native | | 2 | DMF | 0.00 6 | 16 | Native | | 2 | DMSO | 0.01 |

### Details about the molecular structure

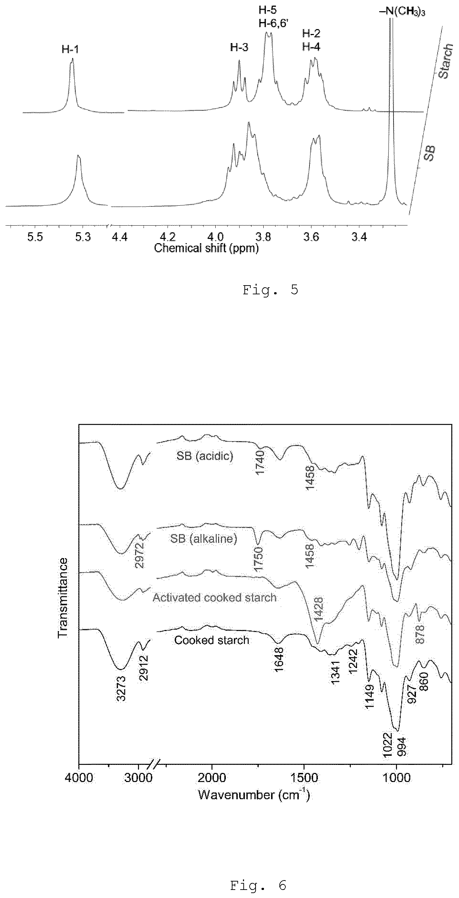

Figure 5 shows the ¹H NMR spectrum for a representative sample of SB, obtained in DMF with basic catalysis (Experiment 2 in Table 1). The singlet at 3.28 ppm is assigned to the nine hydrogens of the quaternary ammonium methyl groups. Resonances from 3.5 to 4 ppm represent the hydrogens attached to carbons 2, 4, 5, 6 (H-6 and H-6') and 3 of the AGU, usually in that order. The doublet for the anomeric proton H⁻¹ (α) is in the low field (5.35 ppm). There was a certain shift to higher values of chemical shift of all signals after cationization, but the clearest change between AGU protons was the signal broadening, given the coexistence of substituted and unsubstituted units. This most clearly affected the two C-6 hydrogens.

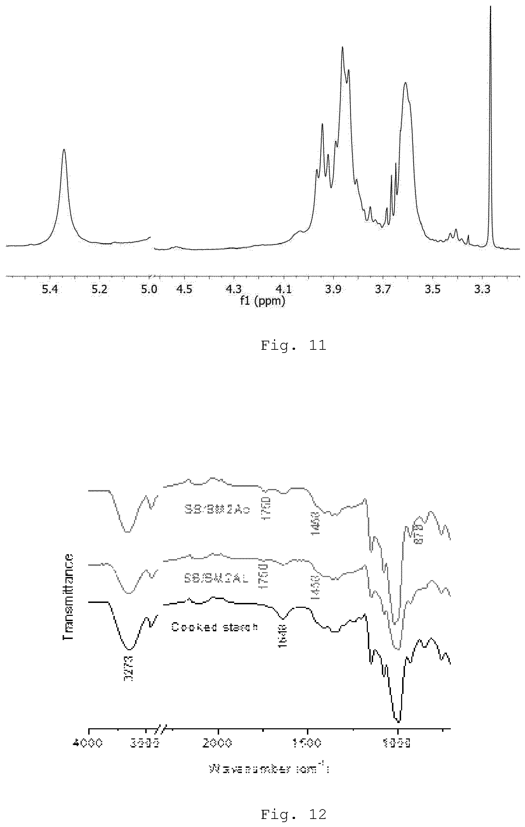

The ¹H-NMR spectra of samples from other reaction conditions are qualitatively identical, differing only in the peak areas, as can be seen in Figure 11.

¹³C-NMR (100 MHz, D2O): δ (ppm) = 53.3 (quaternary ammonium methyl groups), 60.4 (C-6), 66.1 (betaine methylene), 69.3-76, 9 (C-2, C-3, C-4, C-5), 99.7 (C-1), 169.2 (C=O) [30].

Transesterification, among other possible routes for the production of starch betainate, avoids the selectivity problems of conventional etherification with CHPTAC or EPTAC. In the latter case, the introduction of substituents on secondary hydroxyl groups, and with the reaction generally being carried out in a strongly alkaline medium, is the cause of obtaining different by-products. In contrast, no by-products were detected in the starch betainate samples.

All mid-infrared spectra in Figure 6 exhibit some fundamental bands typical of polysaccharides, at 3273 cm⁻¹ and 2912 cm⁻¹, related to the O - H and C - H elongation vibration, respectively. The absorption at 1648 cm⁻¹ is attributed to an O-H angular deformation vibration due to water sorption. Other bands, such as those at 1341 cm⁻¹, 1149 cm⁻¹, 994 cm⁻¹, 860 cm⁻¹ indicate the C - H elongation, C - O - C elongation asymmetric, C - O - H and C - O elongation, respectively. The band at 927 cm⁻¹ is associated with the vibration of the D-glucopyranose ring. The strong absorption band at 1022 cm⁻¹ can be attributed to the C - O - H elongation, while at 1242 cm⁻¹ it is specific for carbon 6 of AGU [31].

The ATR-FTIR spectrum of alkaline starch is also presented in Figure 6 to prove the success of deprotonation: the prominent peak at 1428 cm⁻¹ (in-plane HCO angular strain) corresponds to the spectra recorded for what other authors call "caustic starch" [32]. After transesterification and washing, all C - O - Na⁺ were replaced or regenerated, and new peaks at 1458 cm⁻¹ and 1750 cm⁻¹ can be observed due to quaternary ammonium groups and ester bonds, respectively [33,34]. It should be noted that when sulfuric acid is used, the ester band is shifted to 1740 cm⁻¹. Furthermore, a barely perceptible band at 2972 cm⁻¹ can be attributed to the C-H elongation of methylene in betaine fractions.

Spectra recorded for other starch betainates were qualitatively similar (Figure 12).

### Thermal stability

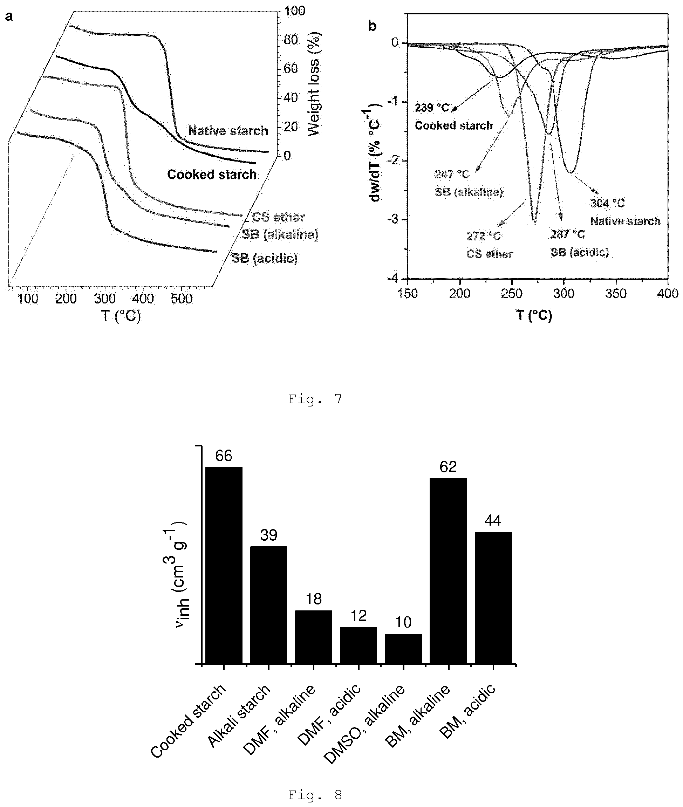

Thermal degradation and differential thermogravimetry curves of native corn starch, cooked starch, starch betainate obtained by acid-catalyzed transesterification (MeBetCl / AGU = 2) and a cationic starch ether (DS = 0.3) prepared conventionally with CHPTAC [5] are shown in Figure 7. Note that these cationic starches were synthesized from the same cooked starch. From Figure 7, a), it can be seen that starch cooking, involving hydrolysis and breakdown of crystalline or semi-crystalline domains, had a major impact on the thermal degradation profile. As the molecular disturbance increases, the temperature corresponding to the maximum degradation rate, or Tmax (Figure 7, b)), changes from 304 °C to 239 °C. In addition, the separation of amylose and amylopectin from packaging set into pure starch granules [2], gives rise to two transitions, the first associated with amylopectin and the second with amylose. This distinction remains vaguely at the BS obtained by alkaline transesterification, whose thermal stability is slightly higher (Tmax = 247 °C).

Interestingly, the thermal behavior of the CS ether was closer to that of native starch, recovering part of the thermal stability lost by cooking. The main difference is not in the type of functional group (ester / ether), as acid-catalyzed transesterification resulted in an SB with Tmax = 287 ° C (Figure 7, b)). It can be suggested that the alkaline and acidic medium had opposite effects on molecular packaging: the former prevented the formation of intra and intermolecular hydrogen bonds, and the latter selectively depolymerized the less ordered domains into sugars that were lost in filtration. In this way, the degree of molecular order of the product became higher than that of the initial cooked starch.

### Analysis of transesterification without solvent (dry method)

In both solution and solventless processes, an acidic or basic catalyst was needed to detect the presence of SB by the aforementioned techniques (¹H NMR, ATR-FTIR). The choice of sulfamic acid for acid-catalyzed solid-state transesterification, rather than sulfuric acid, was due to its high melting point (205 °C), its lack of hygroscopicity, and its lower corrosivity on steel surfaces. Despite its reactivity, no by-products were detected by analytical techniques after washing.

Regardless of whether the reaction (Figure 2) takes place in the solid state or in solution, the mechanism is the same - a reversible bimolecular substitution. However, in the absence of solvents and heating, and since the reaction was stopped after only 2 hours, equilibrium values were not reached. The type of catalyst, acid or alkaline pre-activation, had no effect on DS. As in the case of the wet method, the reaction proceeded to a greater extent when the molar ratio of MeBetCl to AGU is higher (Table 2). Although these DS values are much lower than those obtained with DMF, a DS of 0.04 is in the high range of commercially available cationic starches.

**Table 2. Reaction conditions and DS obtained in solid state transesterification.**

| Exp. | Type of starch | Medium | eq. MeBetCl | DS |
|---|---|---|---|---|
| 1 | Cooked | Alkaline | 1 | 0.006 |
| 2 | Cooked | | 2 | 0.04 |
| 3 | Cooked | Acid | 1 | 0.006 |
| 4 | Cooked | | 2 | 0.04 |

The ¹H-NMR and ATR-FTIR spectra of SB/BM were qualitatively identical to those of SB synthesized in a wet medium after alkaline activation, that is, those shown in Figures 5 and 6.

### Starch degradation

Although DMF and DMSO are, by themselves, non-derivatizing solvents for starch, the systems resulting from their combination with MeBetCl and alkaline starch or sulfuric acid produced more solvolysis than expected.

Figure 8 depicts the calculations of inherent viscosities (*v*ᵢₙₕ) for cooked starch, alkaline starch and starch betainate obtained with a molar ratio of 2 (experiments 2, 6 and 10 in Table 1; experiments 2 and 4 in Table two). Since the measurements were performed with very dilute solutions, the inherent viscosity is approximately the same as the intrinsic viscosity. However, the molecular weight cannot be estimated reliably, as the degree of branching of amylopectin in the samples, on which the Mark-Houwink parameters are very dependent [35], is unknown.

In any case, it can be concluded that the lower viscosity of starch alkoxide is not necessarily due to degradation in boiling NaOH/ethanol, but rather to conformational changes as charges along the polymer repel each other [36]. Of all the SB samples, only those produced by BM showed DP values in the range of the initial cooked starch. As an explanation for the low DS values found in DMSO, the degradation in this solvent was more severe than in DMF. In addition, acidic media consistently caused more depolymerization than basic media. Actually, the value corresponding to DMSO/H₂SO₄ is not given because no reliable measurement could be performed following the same procedure, since the starch was decomposed into small dextrins. The resulting maltodextrin betainates may be useful for certain applications, but a different separation method must be applied to produce them in high yield.

### Morphology of starch derivatives

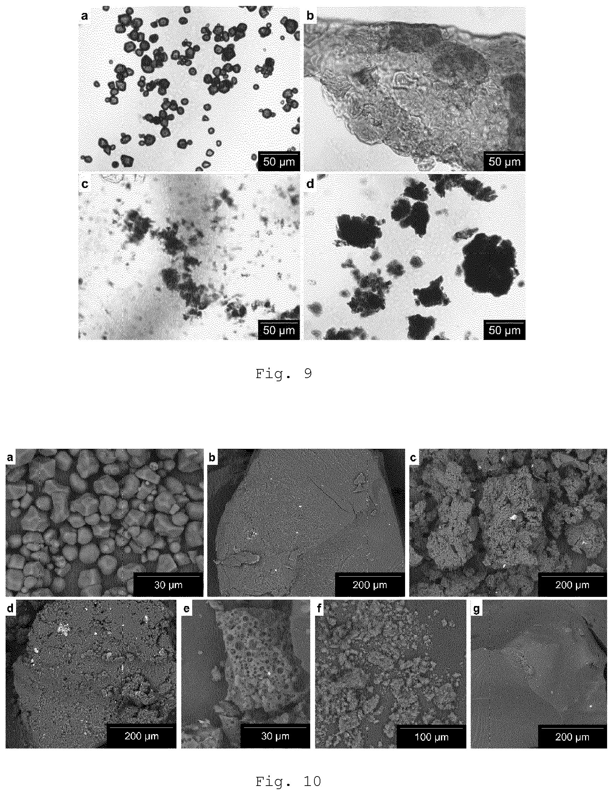

Images of starch, cooked starch and cationic starch derivatives are shown in Figures 9 and 10. While the former shows the form of particles suspended in water with a little iodine, the latter presents a SEM view of dry samples. The native starch particles used in this work (Figures 9, a) and 8, a)) include spherical granules (diameter 1-10 µm), lenticular granules and small aggregates. This granular or semi-crystalline structure was lost in all treatments and not recovered in cold water (Figure 9, b-d)). Thus, it can be said that there was no retrogradation, which is desirable in applications where the amorphous form is preferred, such as in the food industry [21]. The SB/BM sample clearly retained a certain degree of molecular order (Figure 10, f)), showing structures more similar to native starch.

The particle size of amorphous starch derivatives is not relevant, as the macromolecules simply agglomerated when precipitated from ethanol. However, the surface changes in these massive clusters are appreciable and significant. The smooth surface of the cooked starch (Figure 10, b) was transformed into rough and meso or macroporous structures by transesterification (Figure 10, c-f)), but not by conventional etherification for a highly substituted CS (Figure 10, g)). Even dextrins formed in acidic DMSO were recovered as porous blocks (Figure 10, e)).

When suspended in water, the high DS SB agglomerates (Experiment 2 in Table 1, Figure 9, c)) underwent rapid dispersion and even dissolution in cold water, unlike cooked starch (Figure 9, b)) and SB / BM little substituted (Figure 9, d)). This increase in solubility is desirable for some applications, such as to replace synthetic polyelectrolytes [37], but undesirable for others, since commercially available cationic starches for surface application to paper are generally insoluble.

## Claims

1. Process for the production of a starch betainate comprising the following steps:
a) esterification of betaine hydrochloride by the addition of an equimolar amount of thionyl chloride to methanol followed by the addition of betaine hydrochloride until a solution of methyl betainate chloride is produced;
b) reflux of the methyl betainate chloride solution obtained in step a) followed by evaporation of methanol, trituration with an ethyl ether, vacuum drying and washing with an ethyl ether until the yellow color disappears and storage under vacuum of the methyl betainate chloride solid obtained;
c) transesterification of a starch with the betainate chloride obtained in step b) in solution with an aprotic solvent or in a dry medium;
d) removal of unreacted methyl betainate by dissolving the product resulting from step c) in distilled water, with stirring and heating, and reprecipitating in ethanol.

2. Process according to claim 1 wherein the starch in step c) is native.

3. Process according to claim 1 wherein the starch in step c) is cooked.

4. Process according to the preceding claim wherein it comprises before step c) a step of cooking the starch in distilled water and using a subsequently denatured α-amylase buffer solution.

5. Process according to any of the preceding claims wherein the transesterification of step c) takes place in solution and in an alkaline medium and comprises the following steps:
e) preactivation of the starch with a solution of sodium hydroxide in ethanol, at reflux, and obtaining an alkalized starch suspension;
f) vacuum filtration of the alkalized starch suspension obtained in step e) and washing with ethanol followed by washing with an ethyl ether until excess sodium hydroxide and ethanol are removed from the solid alkalized starch obtained;
g) transesterification of the alkalized starch obtained in step f) with methyl betainate chloride in solution with an aprotic solvent and at temperatures between 50 and 90 °C and subsequent reflux of the resulting solution;
h) precipitation of the solution resulting from step g) in absolute ethanol, followed by washing with ethanol, vacuum filtration and drying in an oven.

6. Process according to any of the preceding claims 1 to 4 wherein the transesterification of step c) takes place in solution and in an acidic medium and in that it comprises the following steps:
i) transesterification of the starch with methyl betainate chloride in solution with an aprotic solvent previously acidified with a strong acid, and at temperatures between 50 °C and 90 °C and subsequent reflux of the resulting solution;
j) precipitation of the solution resulting from step i) in absolute ethanol, followed by washing with ethanol, vacuum filtration and drying in an oven.

7. Process according to the preceding claim wherein the strong acid in step i) is sulfuric acid.

8. Process according to any of the preceding claims 6 to 7 wherein the aprotic solvent in step i) is dimethylformamide or dimethylsulfoxide.

9. Process according to any of the preceding claims 1 to 5 wherein takes place in dry and basic medium and comprises the following steps:
k) preactivation of the starch according to steps e) and f) of claim 5 to obtain solid alkalized starch;
l) transesterification of the alkalized starch obtained in step k) with methyl betainate chloride in a ball mill at room temperature.

10. Process according to any of the preceding claims 1 to 4 wherein takes place in a dry and acidic medium and for comprises the following steps:
m) transesterification of the starch with the methyl betainate chloride after mixing with a solid acid and with a pKa of 1 or less, in a ball mill at room temperature.

11. Process according to the preceding claim wherein the solid acid in step m) is sulfamic acid.

## Patentansprüche

1. Verfahren zur Herstellung eines Stärkebetainats, umfassend die folgenden Schritte:
a) Veresterung von Betainhydrochlorid durch Zugabe einer äquimolaren Menge Thionylchlorid zu Methanol, gefolgt von der Zugabe von Betainhydrochlorid, bis eine Lösung von Methylbetainatchlorid entsteht;
b) Rückfluss der in Schritt a) erhaltenen Methylbetainatchlorid-Lösung, gefolgt von Verdampfen des Methanols, Verreiben mit einem Ethylether, Vakuumtrocknen und Waschen mit einem Ethylether, bis die gelbe Farbe verschwindet, und Lagerung des erhaltenen Methylbetainatchlorid-Feststoffs unter Vakuum;
c) Umesterung einer Stärke mit dem in Schritt b) erhaltenen Betainatchlorid in einer Lösung mit einem aprotischen Lösungsmittel oder in einem trockenen Medium;
d) Entfernen von nicht umgesetztem Methylbetainat durch Auflösen des aus Schritt c) resultierenden Produkts in destilliertem Wasser unter Rühren und Erhitzen und erneutes Ausfällen in Ethanol.

2. Verfahren nach Anspruch 1, wobei die Stärke in Schritt c) nativ ist.

3. Verfahren nach Anspruch 1, wobei die Stärke in Schritt c) gekocht wird.

4. Verfahren nach dem vorhergehenden Anspruch, wobei es vor Schritt c) einen Schritt des Kochens der Stärke in destilliertem Wasser und der Verwendung einer anschließend denaturierten α-Amylase-Pufferlösung umfasst.

5. Verfahren nach einem der vorhergehenden Ansprüche, wobei die Umesterung in Schritt c) in Lösung und in einem alkalischen Medium stattfindet und die folgenden Schritte umfasst:
e) Voraktivierung der Stärke mit einer Lösung von Natriumhydroxid in Ethanol unter Rückfluss und Erhalt einer alkalisierten Stärkesuspension;
f) Vakuumfiltration der in Schritt e) erhaltenen alkalisierten Stärkesuspension und Waschen mit Ethanol, gefolgt von Waschen mit einem Ethylether, bis überschüssiges Natriumhydroxid und Ethanol aus der erhaltenen festen alkalisierten Stärke entfernt sind;
g) Umesterung der in Schritt f) erhaltenen alkalisierten Stärke mit Methylbetainatchlorid in Lösung mit einem aprotischen Lösungsmittel und bei Temperaturen zwischen 50 und 90 °C und anschließendes Rückflusskochen der resultierenden Lösung;
h) Ausfällung der aus Schritt g) resultierenden Lösung in absolutem Ethanol, gefolgt von Waschen mit Ethanol, Vakuumfiltration und Trocknen in einem Ofen.

6. Verfahren nach einem der vorhergehenden Ansprüche 1 bis 4, wobei die Umesterung in Schritt c) in Lösung und in einem sauren Medium stattfindet und die folgenden Schritte umfasst:
i) Umesterung der Stärke mit Methylbetainatchlorid in einer Lösung mit einem aprotischen Lösungsmittel, das zuvor mit einer starken Säure angesäuert wurde, und bei Temperaturen zwischen 50 °C und 90 °C und anschließendes Rückflusskochen der resultierenden Lösung;
j) Ausfällung der aus Schritt i) resultierenden Lösung in absolutem Ethanol, gefolgt von Waschen mit Ethanol, Vakuumfiltration und Trocknen in einem Ofen.

7. Verfahren nach dem vorhergehenden Anspruch, wobei die starke Säure in Schritt i) Schwefelsäure ist.

8. Verfahren nach einem der vorhergehenden Ansprüche 6 bis 7, wobei das aprotische Lösungsmittel in Schritt i) Dimethylformamid oder Dimethylsulfoxid ist.

9. Verfahren nach einem der vorhergehenden Ansprüche 1 bis 5, das in trockenem und basischem Medium stattfindet und die folgenden Schritte umfasst:
k) Voraktivierung der Stärke gemäß den Schritten e) und f) von Anspruch 5, um feste alkalisierte Stärke zu erhalten;
l) Umesterung der in Schritt k) erhaltenen alkalisierten Stärke mit Methylbetainchlorid in einer Kugelmühle bei Raumtemperatur.

10. Process according to one of the preceding claims 1 to 4, which takes place in a dry and acidic medium and comprises the following steps:
m) transesterification of the starch with the methyl betaine chloride after mixing with a solid acid and with a pKa of 1 or less in a ball mill at room temperature.

11. Process according to the preceding claim, wherein the solid acid in step m) is sulfamic acid.

## Revendications

1. Procédé de production d'un bétaïnate d'amidon comprenant les étapes suivantes:
a) estérification du chlorhydrate de bétaïne par addition d'une quantité équimolaire de chlorure de thionyle au méthanol, suivie de l'addition de chlorhydrate de bétaïne jusqu'à ce qu'une solution de chlorure de bétaïne de méthyle soit produite;
b) reflux de la solution de chlorure de méthylbétainate obtenue à l'étape a) suivi d'évaporation du méthanol, trituration avec un éther éthylique, séchage sous vide et lavage avec un éther éthylique jusqu'à disparition de la couleur jaune et stockage sous vide du solide chlorure de méthylbétaïnate obtenu;
c) transestérification d'un amidon avec le chlorure de bétaïnate obtenu à l'étape b) en solution avec un solvant aprotique ou en milieu sec ;
d) élimination du bétaïnate de méthyle n'ayant pas réagi par dissolution du produit issu de l'étape c) dans de l'eau distillée, sous agitation et chauffage, et reprécipitation dans l'éthanol.

2. Procédé selon la revendication 1 dans lequel l'amidon de l'étape c) est natif.

3. Procédé selon la revendication 1 dans lequel l'amidon de l'étape c) est cuit.

4. Procédé selon la revendication précédente dans lequel il comprend avant l'étape c) une étape de cuisson de l'amidon dans de l'eau distillée et d'utilisation d'une solution tampon d'a-amylase dénaturé par la suite.

5. Procédé selon l'une quelconque des revendications précédentes dans lequel la transestérification de l'étape c) a lieu en solution et en milieu alcalin et comprend les étapes suivantes:
e) préactivation de l'amidon avec une solution de soude dans l'éthanol, à reflux, et obtention d'une suspension d'amidon alcalinisée;
f) filtration sous vide de la suspension d'amidon alcalinisé obtenue à l'étape e) et lavage à l'éthanol suivi d'un lavage à l'éther éthylique jusqu'à éliminer les excès de soude et d'éthanol de l'amidon solide alcalinisé obtenu;
g) transestérification de l'amidon alcalinisé obtenu à l'étape f) avec du chlorure de bétaïnate de méthyle en solution avec un solvant aprotique et à des températures comprises entre 50 et 90 °C et reflux ultérieur de la solution résultante;
h) précipitation de la solution issue de l'étape g) dans l'éthanol absolu, suivi d'un lavage à l'éthanol, d'une filtration sous vide et d'un séchage à l'étuve.

6. Procédé selon l'une quelconque des revendications 1 à 4 précédentes dans lequel la transestérification de l'étape c) a lieu en solution et en milieu acide et en ce qu'elle comprend les étapes suivantes:
i) transestérification de l'amidon avec du chlorure de bétaïnate de méthyle en solution avec un solvant aprotique préalablement acidifié avec un acide fort, et à des températures comprises entre 50 °C et 90 °C et reflux ultérieur de la solution résultante;
j) précipitation de la solution issue de l'étape i) dans l'éthanol absolu, suivi d'un lavage à l'éthanol, d'une filtration sous vide et d'un séchage à l'étuve.

7. Process according to the preceding claim in which the strong acid in step i) is sulphuric acid.

8. Process according to any one of the preceding claims 6 to 7, in which the aprotic solvent in step i) is dimethylformamide or dimethylsulphoxide.

9. Procédé selon l'une quelconque des revendications précédentes 1 à 5 dans lequel il se déroule en milieu sec et basique et comprend les étapes suivantes:
k) préactivation de l'amidon selon les étapes e) et f) de la revendication 5 pour obtenir un amidon solide alcalinisé ;
l) transestérification de l'amidon alcalinisé obtenu à l'étape k) avec du chlorure de bétaïnate de méthyle dans un broyeur à boulets à température ambiante.

10. Procédé selon l'une quelconque des revendications 1 à 4 précédentes, dans lequel il déroule en milieu sec et acide et comprend les étapes suivantes :
m) transestérification de l'amidon avec le chlorure de bétaïnate de méthyle après mélange avec un acide solide et avec un pKa de 1 ou moins, dans un broyeur à boulets à température ambiante.

11. Procédé selon la revendication précédente dans lequel l'acide solide de l'étape m) est l'acide sulfamique.
